# EUROPÄISCHE PATENTANMELDUNG

(11) **EP 1 538 359 A1**
(43) Veröffentlichungstag der Anmeldung: **08.06.2005**
(21) Anmeldenummer: 04028689.0
(22) Anmeldetag: 03.12.2004
(51) Int. Cl.: F16D 23/14

(54) **Kupplungsausrücklager**

(30) Priorität: 03.12.2003 JP 2003405005
(71) Anmelder: NTN CORPORATION, Osaka-shi, Osaka-fu (JP)
(72) Erfinder: Yasui, Makoto, Iwata-shi Shizuoka-ken (JP); Tokuda, Makoto, Iwata-shi Shizuoka-ken (JP)
(74) Vertreter: Schieschke, Klaus, Dipl.-Ing.

(57) **Zusammenfassung**

Die Erfindung betrifft eine selbstzentrierende Kugellager-Einheit für Kupplungsauslösen mit einem Kugellager 30, das die Berührungsstelle zum Berühren mit der Drehteile der Kupplungsvorrichtung aufweist, einer Muffe 10 aus Kunststoff, die sich innerhalb des Kugellagers 30 befindet, einer pressgeformten Seitenblech 20 aus Stahlblech, die sich vom Mantel der Muffe 10 nach außen erstreckt, mit dem Kugellager 30 an einer axiale Seite radial verschiebbar berührt und mit der Auslösgabel an der andre Seite berührt und einem Federmittel 40, das das Kugellager 30 gegen die Seitenplatte 20 elastisch drückt, Wenn die Seitenplatte 20 von der Spitze der Gabel belastet wird, wird die Muffe 10 von der Verformung dadurch nicht beeinflusst, dass die Muffe 10 und die Seitenplatte 20 getrennt ausgebildet sind.

## Beschreibung

Die Erfindung bezieht sich auf eine selbstzentrierende Kugellager-Einheit zum Kupplungsauslösen, die sich zwischen einem Motor und einem Getriebe befindet und von dem Ersteren zum Letzteren die Kraft überträgt oder sperrt.

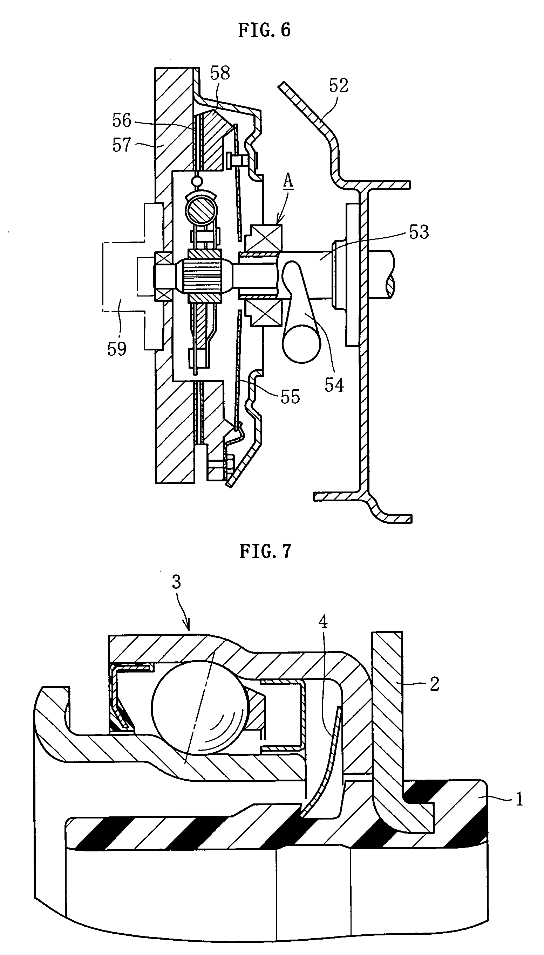

Wie in der Fig.6 schematisch gezeigt ist, ist eine Kugellager-Einheit für Kupplungsauslösen zwischen dem Motor (Antriebswelle 59) eines Autos mit manuellem Getriebe und dem Getriebe 52 angeordnet; sie wird von der mit dem Bedienen des Kupplungspedals (nicht gezeigt) gekoppelt schwingenden Gabel 54 zum Auslösen gedrückt, auf dem Frontdeckel 53 in Richtung zum Motor verschoben und sperrt funktionsweise zeitweilig die Übertragung des Drehmoments des Motors zum Getriebe 52 ab. Durch Bedienen des Kupplungspedals schwingt die Gabel 54 gegen den Uhrzeigersinn und drückt das Kugellager A durch die Berührung mit der Seitenplatte axial nach dem Motor. Dadurch berührt der Innenring des Kugellagers A die Membranfeder 55, ferner entfernt sich durch die Biegungselastizität der Membranfeder 55 die Druckplatte 58, die die Kupplungsscheibe 56 gegen das Schwungrad 57 drückt, von der Kupplungsscheibe 56. Das Drehmoment der Antriebswelle 59 des Motors wird zeitweilig vom Getriebe 52 abgesperrt.

Als Kugellager-Einheit A für Kupplungsauslösen wird z.B. die in der Fig.7 gezeigten Einheit verwendet. Diese Kugellager-Einheit besteht hauptsächlich aus einer Muffe 1 aus Kunststoff, einer Seitenplatte 2 und einem Kugellager 3, das elastisch durch das Federmittel 4 gegen die Seitenplatte 2 gedrückt ist. Die Ringe des Kugellagers 3 werden aus Stahlblech durch die Pressverformung gebildet und die Seitenplatte 2 wird mit der Muffe 1 aus Kunststoff integriert gebildet. (siehe die Offenlegungsschrift Tokukaihei-270584).

Im Fall des obengenannten herkömmlichen selbstzentrierenden Kugellagers zum Kupplungsauslösen verformt sich die Bohrung der Seitenplatte 2 zum Oval wegen der Belastung von zwei Punkten der Gabelspitzen. Konkret gesprochen verformt es sich um mehrere Dutzend entgegen dem Zustand ohne Belastung. Die mit der Seitenplatte 2 integriert geformte Muffe 1 verformt sich gleichfalls unter dem Einfluss der Biegung der Seitenplatte 2. Wenn diese Belastung zu groß ist, bleibt die Muffe 1 am Frontdeckel bei der Verschiebung der Muffe 1 hängen und die Kupplung ist eventuell schwer zu betätigen.

Der Hauptaufgabe der Erfindung besteht darin, die Muffe so auszubilden, dass sie sich nicht verformt, wenn die Seitenplatte von der Gabelspitze belastet wird.

Die selbstzentrierbare Kugellager-Einheit für Kupplungsauslösen gemäß der Erfindung ist vorgesehen mit einem Kugellager, das die Berührungsstelle zum Berühren mit der Drehteile der Kupplungsvorrichtung aufweist, einer Muffe aus Kunststoff, die sich innerhalb des Kugellagers befindet, einer pressgeformten Seitenplatte aus Stahlblech, die sich vom Mantel der Muffe nach außen erstreckt, mit dem Kugellager an einer axialen Seite radial verschiebbar berührt und mit der Auslösgabel an der andre Seite berührt und einem Federmittel, das das Kugellager gegen die Seitenplatte elastisch drückt; sie ist dadurch gekennzeichnet, dass die Muffe und die Seitenplatte getrennt sind.

Wenn der Innenring des Kugellagers die obengenannte Berührungsstelle aufweist, der Außenring aus Stahlblech gebildet ist und einen nach innen ausrichtenden Flansch ausweist und das Federmittel zwischen der Muffe und dem Flansch liegt, wird der Flansch des Außenrings durch die Druckkraft des Federmittels gegen die Seitenplatte elastisch gedrückt und das Kugellager wird im radial verschiebbaren Zustand elastisch gehalten.

Zwischen der Seitenplatte und der Muffe kann ein Federmittel gelegt werden. Dadurch kann sich die Muffe gegenüber der Seitenplatte neigen, so dass sich die Muffe immer entlang den Frontdeckel verschieben kann. Daher können der ungleiche Verschleiß und / oder das metallische Haften vermieden werden. Als Beispiele des Federmittels können Tellerfeder, Wellenfeder, Gummi usw. genannt werden.

Zur Vermeidung des Verschleißes wegen des relativen Rutschens zwischen der Seitenplatte und der Muffe kann ein Mittel vorgesehen werden, das die Verdrehung dazwischen vermeidet. Verwendet werden kann z.B. ein solcher Vermeidungsmechanismus, dass einerseits eine Ausnehmung und anderseits ein Vorsprung vorgesehen sind und miteinander greifen.

Gemäß der Erfindung wird der schlechte Einfluss, dass sich die Bohrung bei der Belastung verformt, dadurch ausgeschlossen, dass die mit der Muffe integrierte Seitenplatte getrennt gebildet ist. Es gibt dadurch Probleme bei herkömmlicher Methode, dass die ungünstige Form wegen des schlechten Fließens des Kunststoffmaterials um die Seitenplatte leicht entstehen kann. Aber dadurch, dass die Muffe und die Seitenplatte getrennt gebildet sind und nur die Muffe separat geformt wird, wird vorteilhafterweise die Genauigkeit eingehalten. Ferner wird die bisher komplizierte Gießform zur integrierten Formung vermieden und die Gießform muss nicht mehr kostspielig sein. Durch die getrennte Formung werden also die Kosten der Gießform billiger und eine Reduzierung der Kosten ist möglich.

Nachfolgend werden Ausführungsbeispiele anhand der Figuren beschrieben. Es zeigt:
- Fig.1: einen Vertikalschnitt (entsprechend der I-I Linie in der Fig.3) der Kugellager-Einheit für Kupplungsauslösen, der ein Ausführungsbeispiel gemäß der Erfindung darstellt,
- Fig.2: einen Schnitt entsprechend der II-II Linie in der Fig.1,
- Fig.3: eine Seitenansicht der Einheit nach der Fig.1,
- Fig.4: eine Ansicht von oben der Einheit nach der Fig.1,
- Fig.5: einen Vertikalschnitt des wichtigen Teils, der ein weiteren Ausführungsbeispiel gemäß der Erfindung darstellt,
- Fig.6: einen Schnitt, der die Umgebung der Kupplungsvorrichtung des Autos darstellt, und
- Fig.7: einen Vertikalschnitt des wichtigen Teiles, der die herkömmliche Art darstellt.

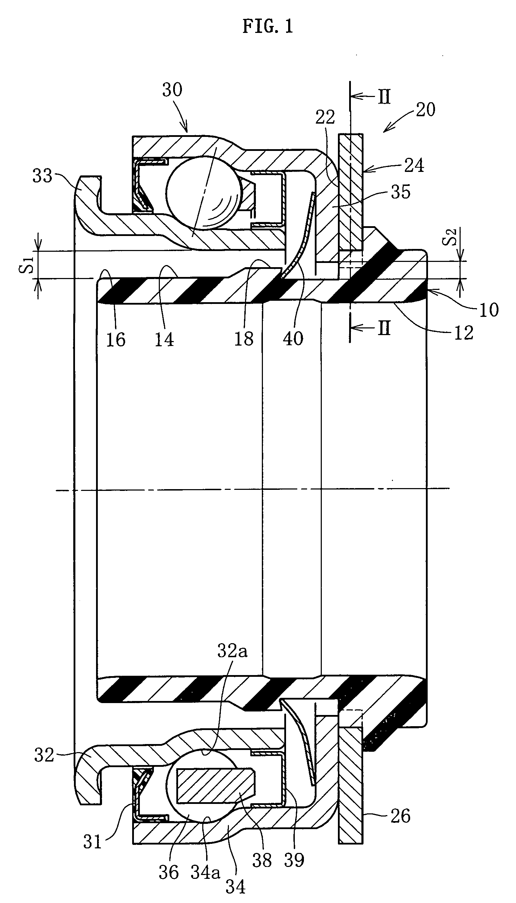

Die selbstzentrierende Kugellager-Einheit zum Kupplungsauslösen, die in der Fig.1 gezeigt ist, ist gleich wie die Kugellager-Einheit A in der Fig.6. Sie ist zwischen dem Motor (Antriebswelle 59) des Autos mit manuellem Getriebe und dem Getriebe 52 angeordnet, verschiebt sich auf dem Frontdeckel 53 axial nach der Motorseite durch das Betätigen der Gabel 54, und sperrt zeitweilig die Übertragung der Drehkraft des Motors zum Getriebe 52 ab.

Die Kugellager-Einheit für Kupplungsauslösen gemäß dieser Ausführungsform besteht als Hauptkomponenten aus einer Muffe 10, einer Seitenplatte 20, einem Kugellager 30 und einem Federmittel 40. Als Federmittel ist hier eine Tellerfeder dargestellt.

Die Muffe 10 ist ein etwa zylindrisch geformter Körper (Spritzguss etc.). Die Bohrung 12 der Muffe 10 ist auf dem Frontdeckel 53 verschiebbar aufgesetzt. An der Kante einer Seite des Mantels 14 der Muffe 10 ist eine kegelförmige Führungsfläche 16 gebildet, ein nach außen vorspringender Anschlag 18 ist etwa in der Mitte (näher zu der anderen Seite) gebildet, und eine Seitenplatte ist vorspringend an der anderen Seite integriert gebildet. Die Führungsfläche 16 hat die Funktion, die Bohrung der Tellerfeder 40 zu führen, wenn die aus dem Kugellager 30 und der Tellerfeder 40 bestehenden Zwischeneinheit auf dem Mantel 14 der Muffe 10 montiert wird. Der Anschlag 18 hat die Funktion, dass die Verschiebung vom eingebauten Zustand unter dem Greifen mit der Bohrung der Tellerfeder 40 vermieden wird. Die Breite des Anschlags 18 ist schmal, dessen eine Seite ist eine stumpfwinkelige Schrägwand und die andere Seite ist eine Senkrechtwand oder etwa spitzwinkelige Schrägwand, die mit der Bohrung der Tellerfeder 40 greift. Die eine Seite hat die Funktion, bei der Montage die Bohrung der Tellerfeder 40 zu führen. An der tiefsten Stelle der Wand der anderen Seite befindet sich eine um die Umfang verlaufende Nut, und die Tiefe dieser Nut ist etwas tiefer als die des Mantels 14.

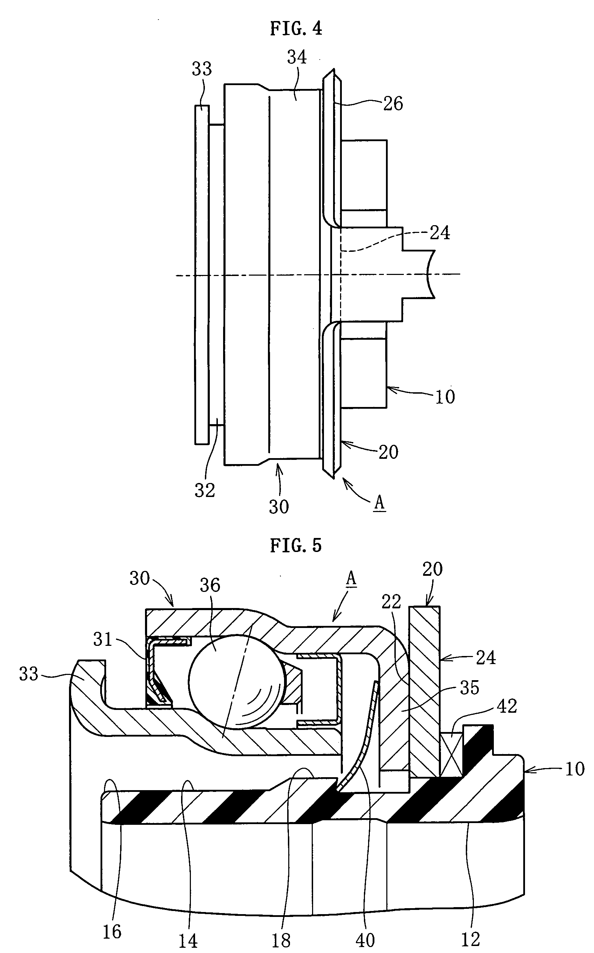

Die Seitenplatte 20 ist ein pressgeformter Ringkörper aus Stahlblech (siehe Fig.3) und ist um dem Mantel der anderen Seite der Muffe 10 integriert eingesetzt. Mit einer Seitenfläche 22 der Seitenplatte 20 berührt sich der Flansch 35 des Außenrings 34 des Kugellagers 30 verschiebbar in der Radialrichtung. An der anderen Seitenfläche sind die mit der Gabel 54 berührenden Berührungsstellen 24 jeweils auf um z.B. 180° entgegengesetzten Stelle angeordnet. In dieser Ausführungsform ist die Zementier-Nitrier-Behandlung zum Härten der Oberflächen durchgeführt, nachdem die Seitenplatte 20 aus kaltgezogenem Stahlblech wie z.B. SPCC-Stahlblech durch Pressformung in festgelegter Form bearbeitet wurde. Wie mit Ziffer 26 in der Fig.1 oder Fig.4 gezeigt ist, ist der Umfangsrand der Seitenplatte 20 außer der Berührungsstelle 24, die mit der Gabel 54 berührt, nach der Kugellagerseite 30 gebogen. Daher ist die Verdichtung und Erhöhung der Festigkeit der Seitenplatte 20 vorgesehen.

Das Kugellager 30 besteht als Hauptkomponenten aus einem Innenring 32, einem Außenring 34, Kugeln 36, einem Käfig 38 und Deckscheiben 31, 39. Der Innenring 32 ist durch Pressen aus Stahlblech geformt, und besteht aus einem sich wesentlich in die Axialrichtung erstreckenden Teil und einem sich wesentlich radial nach außen erstreckenden Teil. Auf dem Außenmantel des sich wesentlich in die Axialrichtung erstreckenden Teils ist eine Laufbahn 32a gebildet. Der sich im Wesentlichen radial nach außen erstreckende Teil ist als Krempe 33 ausgebildet, die mit der Membranfeder (55) berührt. Auch der Außenring 34 ist durch Pressen aus Stahlblech geformt, und besteht aus einem sich wesentlich in die Axialrichtung erstreckenden Teil und einem sich wesentlich radial nach innen erstreckenden Flanschteil 35. Innen auf der Bohrung des sich wesentlich in die Axialrichtung erstreckenden Teils ist eine Laufbahn 34a gebildet. Zwischen dem Innenring 32 und dem Außenring 34 befinden sich die Mehrzahl der Kugeln 36, die sich jeweils die Laufbahnen 32a, 34a winkelig berühren. Die Kugeln 36 werden durch einen Käfig 38 in der Umfangsrichtung mit bestimmtem Abstand gehalten. Einerseits sind eine erste Deckscheibe 31 und anderseits eine zweite Deckscheibe 39 vorgesehen, die den Spalt zwischen dem Mantel des Innenrings 32 und der Bohrung des Außenrings 34 dichten.

In dieser Ausführungsform ist die erste Deckscheibe 31 eine elastische Deckscheibe vom nicht berührenden Typ, die durch das Eindrücken des Außenmantels in die einseitigen Bohrung des Außenrings 34 befestigt ist. Deren innenseitige Lippe nähert sich dem einseitigen Mantel des Innenrings 32 mit dem Labyrinth-Spielraum. Die zweite Deckscheibe 39, deren Schnitt etwa winkelige C-Form aufweist, ist eine aus Stahlblech pressgeformte Deckscheibe, die durch das Eindrücken des Außenmantels in die anderseitigen Bohrung des Außenrings 34 befestigt ist; deren innenseitige Kante nähert sich dem anderseitigen Mantel des Innenrings 32 mit dem Labyrinth-Spielraum. Als erste und/oder zweite Deckscheibe können auch die für Wälzlager bekannten Deckscheiben vom berührenden Typ verwendet werden.

Der Innenring 32 wird aus Stahlblech z.B. durch das Verfahren Pressen, Warmbehandlung, Schleifen der Laufbahn 32a und der Deckscheibenstelle hergestellt. Als Rohmaterial des Stahlblechs kann das zementierbare Stahlblech und als Warmbehandlung kann Zementier-Warmbehandlung verwendet werden. Als zementierbare Stähle können Nickel-Chrom-Stahl (SNC), Nickel-Chrom-Molybdän-Stahl (SNCM), Chrom-Stahl (SCr) und Chrom-Molybdän-Stahl (SCM) genannt werden. Bei Nickel-Chrom-Stahl (SNC) und Nickel-Chrom-Molybdän-Stahl (SNCM) von diesen Stählen entsteht selten die Überzementierung und sie sind auch in der mechanischen Eigenschaft gutes Material. Allerdings enthalten sie als Legierungselement das kostspielige Nickel, so dass sie Probleme bezüglich der Kosten haben. Wenn die für Innenringe erforderliche mechanischen Eigenschaft in Betracht gezogen wird, könnte SNC-Stahl oder SNCM-Stahl überqualitativ sein und kann mit Kosten nicht ausgeglichen werden. Demgegenüber entsteht bei Chrom-Molybdän-Stahl (SCM) selten die Überzementierung und er hat gute Abschreckungseigenschaft. Außerdem ist er relative billiger im Vergleich mit SNC-Stahl oder SNCM-Stahl. Die für Innenringe der Kugellager-Einheit erforderlichen mechanischen Eigenschaft ist ausreichend erfüllt. Aus diesen Gründen wird vorzugsweise als Material für Innenringe 32 das Chrom-Molybdän-Stahl (SCM) verwendet. In den Chrom-Molybdän-Stählen (SCM) gibt es nach enthaltenem Kohlenstoff SCM415, SCM418, SCM420, SCM421 und SCM822, und das SCM415 davon ist am vorteilhaftesten.

Das Kugellager 30 ist zwischen dem Außenmantel 14 der Muffe 10 und der einseitigen Seitenfläche 22 der Seitenplatte 20 angeordnet, und durch Tellerfeder 40 als Federmittel elastisch gehalten. Die Tellerfeder 40 ist im Schnitt kegelförmig durch Pressen hergestellt, mit Mehrzahl des Ausschnitts, der von der Bohrung her ausgeschnitten geformt ist, und mit Mehrzahl der zwischen nebeneinander liegenden Ausschnitten gebildeten Zunge regelmäßig auf dem Umfang vorgesehen. Wie in der Fig.1 dargestellt ist, zeigt die Tellerfeder 40 wegen der elastischen Verformung die kegelwinkelige Zylinderform, je nach der elastischen Verformung der Zunge vergrößert oder verkleinert die Bohrung der Tellerfeder 40.

Bei der Montage wird die aus einem eingebauten Kugellager 30 und eine Tellerfeder 40 bestehende Zwischeneinheit von einer Seite her auf den Außenmantel 14 der Muffe 10 aufgesetzt und eingeschoben, bis der Flansch 35 des Außenrings 34 des Kugellagers 30 mit der Seitenfläche 22 der Seitenplatte 20 berührt und die Zunge (Bohrung) der Tellerfeder 40 mit der anderseitigen Wand des Anschlags 18 berührt. Im Prozess des Schiebens der obengenannten Zwischeneinheit kommt die Zunge (Bohrung) der Federmittel 40 zuerst führend von Führungsstelle 16 der Muffe 10 auf den Außenmantel 14, anschließend auf den Außenmantel 14 rutschend mit der einseitigen Schrägwand des Anschlags 18 und ist von der Schrägwand führend in die andere Seite des Anschlags 18 eingesetzt. Wie beschrieben, wird die Montage bei der Kugellager-Einheit gemäß dieser Ausführungsform nur dadurch durchgeführt, dass eine Zwischeneinheit der Kugellager 30 und Tellerfeder 40 auf den Außenmantel 14 der Muffe 10 eingebaut wird (Fig.1).

Zwischen dem Außenmantel 14 der Muffe 10 und der Bohrung des Innenrings 32 des Kugellagers 30 befindet sich ein Radialspiel S₁, und zwischen der Bohrung des Flanschs 35 des Außenrings 34 und dem Außenmantel 14 der Muffe 10 befindet sich Radialspiel S₂. Das Radialspiel S₂ ist kleiner als das Radialspiel S₁ (S₁> S₂). Durch den Federungsdruck der Tellerfeder 40, die zwischen dem Anschlag 18 der Muffe 10 und der Bohrung des Flanschs 35 des Außenrings 34 gedrückt liegt, wird der Flansch 35 des Außenrings 34 gegen die Seitenfläche 22 der Seitenplatte 20 elastisch gedrückt; und das Kugellager 30 wird zwischen dem Außenmantel 14 der Muffe 10 und der Seitenfläche 22 der Seitenplatte 20 im dem in Radialrichtung verschiebbaren Zustand elastisch gehalten. Das Kugellager 30 kann sich auf der Grund der Existenz des Radialspiels S₁ und S₂ zu der Muffe 10 und der Seitenplatte 20 in die Radialrichtung zur Zentrierung verschieben, und die Verschiebung zur Zentrierung wird durch das kleineren Radialspiel S₂ begrenzt. Obwohl die Abweichung zwischen dem Drehzentrum der Membranfeder (55) und dem Drehzentrum des Kugellagers wegen der beim Einbau entstandenen Abweichung zwischen der Achse des Frontdeckels (53) und der Achse der Antriebswelle (59) entstanden ist, kann die Versetzung der Achsen durch das Verschiebung des Kugellagers 30 zur Zentrierung nach der Abweichung automatisch verstellt werden. Außerdem wird das Kugellager 30 nach der erforderlichen Verschiebung zur Zentrierung durch die Federungsdruck des Tellerfeder 40 auf der selben Stelle elastisch gehalten, und versetzt sich unter Vibrationen und / oder Stoß etc. nicht mehr. Dies bewirkt die sogenannte Zentriergegenkraft.

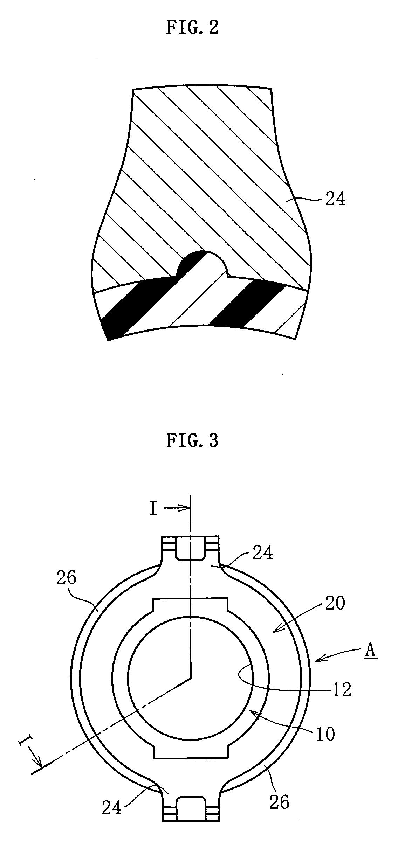

In der Ausgestaltung dieser Ausführung ist ein Verdrehanschlag zwischen der Muffe 10 und der Seitenplatte 20 vorgesehen. Wie in Fig.2 gezeigt ist, sind einerseits eine Ausnehmung 28 auf der Seitenplatte 20 und anderseits ein Vorsprung 19 auf der Muffe 10 gebildet, und die beiden greifen miteinander. Daher können sich die Muffe 10 und die Seitenplatte 20 axial relativ bewegen, aber nicht in Umfangsrichtung.

Fig.5 zeigt eine Ausgestaltung der Ausführung, wobei zwischen der Muffe 10 und der Seitenplatte 20 ein Federmittel 42 geklemmt ist. In diesem Fall kann sich die Muffe 10 zu der Seitenplatte 20 neigen, und die Muffe 10 kann sich dadurch entlang den Frontdeckel 53 verschieben. Deshalb ist es möglich, den ungleichen Verschleiß und / oder das metallische Kleben zu vermeiden. In diesem Fall ist so eingestellt, dass die Kraft vom Federmittel 40 und die Kraft vom Federmittel Mittel 42 ungefähr gleich sind.

Allerdings wird die Kugellager-Einheit mit der Dichtung gemäß der Erfindung von der obengeschriebenen Ausführungsform nicht begrenzt, und kann innerhalb des Sinns der Erfindung in verschiedene Modifikationen und / oder Varianten ausgeführt werden.

### Bezugszeichenliste

- 10: Muffe
- 12: Bohrung
- 14: Mantel
- 16: Führungsfläche
- 18: Anschlag
- 19: Vorsprung
- 20: Seitenplatte
- 22: Seitenfläche
- 24: Berührungsstelle
- 28: Ausnehmung
- 30: Kugellager
- 31: Deckscheibe
- 32: Innenring
- 33: Krempe
- 34: Außenring
- 35: Flansch
- 36: Kugeln
- 38: Käfig
- 39: Deckscheibe
- 40: Tellerfeder
- 52: Getriebe
- 53: Frontdeckel
- 54: Gabel
- 55: Membranfeder
- 59: Antriebswelle

## Patentansprüche

1. Selbstzentrierende Kugellager-Einheit zum Kupplungsauslösen mit einem Kugellager, das die Berührungsstelle zum Berühren mit der Drehteile der Kupplungsvorrichtung aufweist, einer Muffe aus Kunststoff, die sich innerhalb des Kugellagers befindet, einer pressgeformten Seitenplatte aus Stahlblech, die sich vom Mantel der Muffe nach außen erstreckt, mit dem Kugellager an einer axialen Seite radial verschiebbar berührt und mit der Auslösgabel an der anderen Seite berührt und mit einem Federmittel, das das Kugellager gegen die Seitenplatte elastisch drückt, vorgesehen,
**dadurch gekennzeichnet, dass** die vorgenannte Muffe und die vorgenannte Seitenplatte getrennt sind.

2. Selbstzentrierende Kugellager-Einheit nach Anspruch 1,
**dadurch gekennzeichnet, dass** der Innenring des Kugellagers eine Berührungsstelle aufweist, der Außenring mit dem nach innen ausrichtenden Flansch aus Stahlblech gepresst hergestellt ist, und ein Federmittel zwischen der Muffe und dem Flansch des Außenrings vorgesehen ist.

3. Selbstzentrierende Kugellager-Einheit nach einem der Ansprüche 1 oder 2,
**dadurch gekennzeichnet, dass** zwischen der Seitenplatte und der Muffe ein Federmittel geklemmt ist.

4. Selbstzentrierende Kugellager-Einheit nach einem der Ansprüche 1, 2 oder 3, **dadurch gekennzeichnet, dass** auf der Seitenplatte und der Muffe Vorrichtungen zur Vermeidung der Verdrehung vorgesehen ist, die miteinander greifen.
